# EUROPÄISCHE PATENTSCHRIFT

(11) **EP 3 283 279 B1**
(45) Veröffentlichungstag und Bekanntmachung des Hinweises auf die Patenterteilung: **03.07.2019**
(21) Anmeldenummer: 16705472.5
(22) Anmeldetag: 15.02.2016
(51) Int. Cl.: B29C 70/52, B29C 70/54, B29D 99/00, B29C 70/46

(54) **PULTRUSION VON ENDLOSPROFILEN MIT DISKONTINUIERLICHEM QUERSCHNITTSVERLAUF**
PULTRUSION OF CONTINUOUS SECTIONS HAVING DISCONTINUOUS CROSS-SECTIONAL PROFILE
PULTRUSION DE PROFILÉS CONTINUS À PROFIL DISCONTINU EN COUPE TRANSVERSALE

(30) Priorität: 16.04.2015 DE 102015206917
(43) Veröffentlichungstag der Anmeldung: 21.02.2018
(73) Patentinhaber: Bayerische Motoren Werke Aktiengesellschaft, 80809 München (DE)
(72) Erfinder: KEIL, Cornelius Johan Kalle, 38644 Gosslar (DE)
(86) Internationale Anmeldenummer: PCT/EP2016/053100
(87) Internationale Veröffentlichungsnummer: WO 2016/165850

(56) Entgegenhaltungen:
- US-A- 5 716 487

## Beschreibung

Die Erfindung betrifft eine Pultrusionsvorrichtung zum Erzeugen eines faserverstärkten Endlosprofils mit einem in Pultrusionsrichtung diskontinuierlichen Querschnittsverlauf, sowie ein Verfahren zu dessen Herstellung.

Pultrusionsverfahren (auch als Strangziehverfahren bezeichnet) ermöglichen die Herstellung von Endlosprofilen, insbesondere faserverstärkten Endlosprofilen aus Kunststoffmaterial, mit einem üblicherweise vordefinierten Profilquerschnitt. Dabei werden in einem ersten Schritt auf Spulen vorgehaltene Verstärkungsfasern, beispielsweise aus Glas- oder Kohlenstofffasern, von den Spulen abgezogen und in einem Imprägnier-Werkzeug mit einer Matrix, beispielsweise einem Harz, imprägniert. Anschließend werden die imprägnierten Fasern durch eine Pressformeinrichtung gezogen und zu einem Pultrusionsprofil (im folgenden auch als Endlosprofil bezeichnet) mit voreingestelltem Querschnitt geformt, bevor das Pultrusionsprofil durch steigende Temperatureinwirkung ausgehärtet wird. Ein derart hergestelltes Profil wird mithilfe einer Zugeinrichtung kontinuierlich durch die einzelnen Bearbeitungsstationen gezogen und anschließend einem Schneidwerkzeug zum Abtrennen von Segmenten definierter Länge zugeführt.

Die mittels der bekannten Pultrusionsverfahren hergestellten Endlosprofile weisen üblicherweise einen entlang ihrer Länge kontinuierlichen Querschnittsverlauf auf. Dies bedeutet, dass der Querschnittsverlauf stetig ohne sprunghafte Verlaufsänderungen ausgeführt ist, so dass eine Außenkontur des Endlosprofils ebenfalls mit stetigem Verlauf, also ohne abrupte Änderungen des Querschnitts, insbesondere ohne "Sprünge", definiert wird. Um Querschnittsänderungen des Endlosprofils zu erzielen, werden während des Betriebs bei gleichzeitiger Fördergeschwindigkeit des Endlosprofils Veränderungen der Pressformgeometrie durchgeführt, wodurch jedoch ausschließlich kontinuierliche Querschnittänderungen des Endlosprofils herstellbar sind, die stetig über eine gewisse Länge des Endlosprofils verlaufen.

Dagegen sind diskontinuierliche, also in einem definierten Abschnitt des Endlosprofils "abrupt" auftretende, unstetige Querschnittänderungen bisher nur unter Inkaufnahme von erheblichen Nachteilen möglich. So ist es beispielsweise bekannt, erst nach Abschluss des Pressformens und Aushärtens ein Stanzwerkzeug zur Bearbeitung des gehärteten Endlosprofils vorzusehen.

Hierbei besteht jedoch die Gefahr, dass bei der Bearbeitung des Endlosprofils im ausgehärteten Zustand insbesondere die integrierte Faserstruktur und eine die Fasern umschließende Matrix beschädigt werden, da der bereits ausgehärtete Kunststoff eine geringere Bruchdehnung und eine geringere plastische Formbarkeit aufweist. Zusätzlich wirken hohe Reibungskräfte sowie hohe Zugspannungen der vorhergehenden Pressformeinrichtung auf das zu bearbeitende Endlosprofil, so dass eine Gefahr des Reißens in deutlich erhöhtem Maße besteht.

Alternativ eingesetzte spanende Bearbeitungsschritte der Endlosprofile erfordern ebenfalls einen ausgehärteten Zustand der Matrix und sind besonders aufwendig und teuer. Zudem bergen sie die Gefahr, dass integrierte Verstärkungsfasern beschädigt oder durchtrennt werden, wodurch eine erhebliche lokale Materialschwächung des Endlosprofils hervorgerufen wird, die in der Regel zur Unbrauchbarkeit des beschädigten Endlosprofils führen kann.

Um einen Profilquerschnitt dagegen bereits vor einem Aushärten zu bearbeiten, ist beispielsweise aus der DE 69605645 T2 eine Pultrusionsvorrichtung zur Erzeugung von Endlosprofilen mit in einer Pultrusionsrichtung veränderlichem Querschnittsverlauf bekannt. Diese sieht eine stationäre oder verfahrbare Umformdüse vor, die eine lokale Querschnittänderung bewirken kann. Hierbei ist das umzuformende Endlosprofil jedoch erheblichen Zugspannungen des nachfolgend angeordneten Zugmittels ausgesetzt, die zu einem leichten Reißen des Endlosprofils führen können.

Die DE69007648 T2 zeigt eine beispielhafte Pultrusionsvorrichtung, bei der eine kontinuierliche Querschnittveränderung durch verschiedene Düsengeometrien erreicht wird.

Des Weiteren ist in der US 5 716 487 A eine weitere Pultrusionsvorrichtung beschrieben.

Aufgabe der Erfindung ist es daher eine Erzeugung eines faserverstärkten Endlosprofils mit einem in einer Pultrusionsrichtung diskontinuierlichen Querschnittsverlauf zu ermöglichen und gleichzeitig eine Beschädigung des erzeugten Endlosprofils oder der integrierten Verstärkungsfasern zu vermindern oder sogar zu verhindern.

Diese Aufgabe wird gelöst mit einer Pultrusionsvorrichtung mit den Merkmalen des Patentanspruchs 1, sowie einem Verfahren gemäß Patentanspruch 8. Vorteilhafte Ausführungsformen ergeben sich aus den jeweils abhängigen Patentansprüchen.

Demnach wird eine Pultrusionsvorrichtung zum Erzeugen eines faserverstärkten Endlosprofils bereitgestellt, wobei das Endlosprofil einen zweiten, in einer Pultrusionsrichtung diskontinuierlichen Querschnittsverlauf aufweist.

Die Pultrusionsvorrichtung umfasst hierzu eine Pressformeinrichtung zur Formgebung des Endlosprofils, umfassend
- eine erste Formgebungsvorrichtung zum Erzeugen des Endlosprofils mit einem kontinuierlichen Querschnittsverlauf, und
- eine bezüglich der ersten Formgebungsvorrichtung in Pultrusionsrichtung nachfolgende, zweite Formgebungsvorrichtung zum Formen des zweiten diskontinuierlichen Querschnittsverlaufs des Endlosprofils.

Außerdem umfasst die Pressformeinrichtung ein Stanzwerkzeug, das zwischen der ersten Formgebungsvorrichtung und der zweiten Formgebungsvorrichtung angeordnet und dazu ausgebildet ist, zumindest in einem definierten Abschnitt des Endlosprofils eine lokale Formänderung des kontinuierlichen Querschnittsverlaufs zu bewirken, um einen ersten diskontinuierlichen Querschnittsverlauf des Endlosprofils zu erzeugen. Als erster diskontinuierlicher Querschnittsverlauf ist der gesamte Querschnittsverlauf des Endlosprofils zu verstehen, der das Stanzwerkzeug durchlaufen hat, unabhängig von einer tatsächlichen Bearbeitung in dem Stanzwerkzeug. Der erste diskontinuierliche Querschnittsverlauf umfasst also sowohl die von dem Stanzwerkzeug bearbeiteten Abschnitte, als auch die nicht bearbeiteten, lediglich von der ersten Formgebungsvorrichtung geformten Abschnitte.

Als Verstärkungsfasern zur Faserverstärkung des Endlosprofils können grundsätzlich alle bekannten und geeigneten Verstärkungsfasern eingesetzt werden, insbesondere Glas-, Kohlenstoff-, Aramid-, Metall- oder Naturfasern, sowie beliebige Mischungen dieser Faserarten.

Die Pultrusionsvorrichtung ermöglicht aufgrund der Aufteilung der Pressformeinrichtung in zwei Formgebungsvorrichtungen das Stanzwerkzeug zwischen diesen beiden Vorrichtungen anzuordnen und somit auf besonders einfache und sichere Weise ein Endlosprofil mit dem finalen, zweiten diskontinuierlichen Querschnittsverlauf herzustellen.

Ein besonderer Vorteil dieser Pultrusionsvorrichtung liegt darin begründet, dass aufgrund des zweistufigen Aufbaus der Pressformeinrichtung zwischen den beiden Formgebungsvorrichtungen lediglich ein reduzierter Zugspannungsanteil auf das Endlosprofil einwirkt. Erst nach der zweiten Formgebungsvorrichtung liegt die volle Zugspannung der Pultrusionsvorrichtung an dem Endlosprofil an. Dies bedeutet, dass aufgrund dieser Ausgestaltung die Bearbeitung mit dem Stanzwerkzeug unter einer reduzierten Zugspannungsbelastung des Endlosprofils erfolgen kann und somit die Gefahr des Reißens deutlich reduziert wird. Die exakte Höhe der reduzierten Zugspannung hängt unter anderem von der Ausgestaltung und Abstimmung der ersten und zweiten Formgebungsvorrichtung sowie der exakten Position des Stanzwerkzeugs zwischen den beiden Formgebungsvorrichtungen ab und kann entsprechend variiert werden.

Die erste und zweite Formgebungsvorrichtung können vollständig voneinander getrennt beziehungsweise beabstandet voneinander ausgebildet sein, um das Stanzwerkzeug zwischen den beiden Formgebungsvorrichtungen anzuordnen. Alternativ ist anstelle einer derartigen kompletten Trennung beider Vorrichtungen auch eine einteilige Form möglich, so dass beide Vorrichtungen zwar miteinander verbunden sind, jedoch eine dazwischen vorgesehene Anordnung des Stanzwerkzeugs mittels einer entsprechenden Aussparung für das Stanzwerkzeug an entsprechender Stelle bereitgestellt wird.

Unter dem Endlosprofil mit diskontinuierlichem Querschnittsverlauf ist insbesondere ein Endlosprofil zu verstehen, dessen beliebige Profilquerschnitte, welche jeweils in einer Ebene senkrecht zur Pultrusionsrichtung betrachtet werden, sich entlang der Längsrichtung des Endlosprofils nicht nur kontinuierlich, also stetig, sondern bei Bedarf auch diskontinuierlich, also abrupt beziehungsweise sprunghaft, ändern können. Entsprechend wird durch den Querschnittsverlauf ein diskontinuierlicher Verlauf einer Außenkontur des Endlosprofils definiert.

Beispielsweise wird das Endlosprofil zuerst in der ersten Formgebungsvorrichtung vorgeformt und erhält zunächst an jeder Stelle seiner Länge den durch die erste Formgebungsvorrichtung definierten ersten (vorläufigen) Profilquerschnitt. Dieser erste Profilquerschnitt kann in Längsrichtung des Endlosprofils entweder konstant gehalten oder variierend ausgeführt sein. Im Falle eines konstanten Profilquerschnitts wird somit ein Endlosprofil erzeugt, das entlang seiner Längserstreckung stets die gleiche Form und Größe des Profilquerschnitts aufweist und damit eine erste Alternative eines kontinuierlichen Querschnittsverlaufs definiert.

Alternativ kann eine Geometrie der ersten Formgebungsvorrichtung bei gleichzeitigem Vorschub zur Förderung des Endlosprofils in Pultrusionsrichtung verändert werden. In diesem Fall ändert sich eine Geometrie des ersten Profilquerschnitts des Endlosprofils entlang seiner Längserstreckung, wobei aufgrund des gleichzeitigen Vorschubs dennoch ein stetiger, kontinuierlicher Querschnittsverlauf ohne sprunghafte Änderungen erzeugt wird.

In beiden Fällen wird also zunächst ein Endlosprofil mit einem stetigen, kontinuierlichen Querschnittsverlauf ohne sprunghafte Verlaufsänderungen erzeugt. Anschließend kann mittels des Stanzwerkzeugs in einem oder mehreren ausgewählten Abschnitten des Endlosprofils die lokale Form des Profilquerschnitts derart bearbeitet werden, dass zumindest in diesem beziehungsweise diesen Abschnitt(en) der zuvor kontinuierliche Querschnittsverlauf in den (ersten) diskontinuierlichen Querschnittsverlauf verformt wird. Mit der beschriebenen Bearbeitung und Verformung der genannten Querschnitte und Querschnittverläufe wird insbesondere die Veränderung der Außenkontur des Endlosprofils bewirkt. Selbstverständlich kann ebenso alternativ oder zusätzlich eine entsprechende Veränderung einer Innenkontur bewirkt werden.

Nachfolgend wird das Endlosprofil der zweiten Formgebungsvorrichtung zugeführt, welche den zweiten diskontinuierlichen Querschnittsverlauf des Endlosprofils erzeugt. Hierbei wird der von dem Stanzwerkzeug vorgeformte erste diskontinuierliche Querschnittsverlauf beim Durchlaufen der zweiten Formgebungsvorrichtung in den zweiten diskontinuierlichen Querschnittsverlauf umgewandelt. Dies bedeutet, dass in der zweiten Formgebungsvorrichtung nochmals eine Formänderung des Endlosprofils erfolgt. Diese kann entweder in den von dem Stanzwerkzeug bearbeiteten Abschnitten, oder in den vom Stanzwerkzeug nicht bearbeiteten, lediglich von der ersten Formgebungsvorrichtung geformten Abschnitten des Endlosprofils erfolgen. Ebenso kann die zweite Formgebungsvorrichtung auch zur Bearbeitung aller Abschnitt ausgeführt sein. Optional kann ein unterschiedlicher Bearbeitungsgrad für die jeweiligen Abschnitte vorgesehen werden.

Mit anderen Worten kann die zweite Formgebungsvorrichtung derart ausgestaltet sein, dass das Endlosprofil lediglich in jenen Abschnitten geformt wird, welche ausschließlich durch die erste Formgebungsvorrichtung und nicht durch das Stanzwerkzeug (vor-)geformt wurden. Selbstverständlich kann die zweite Formgebungsvorrichtung auch derart konfiguriert sein, dass alternativ oder zusätzlich die von dem Stanzwerkzeug umgeformten Abschnitte (nochmals) eine Umformung erfahren.

Gemäß einer Ausführungsform ist das Stanzwerkzeug in der Pultrusionsrichtung zumindest zwischen einer Anfangsposition und einer Endposition parallel zu der Pultrusionsrichtung verfahrbar ausgebildet. Das Stanzwerkzeug kann somit das in der Pultrusionsvorrichtung mit einer bestimmten Vorschubgeschwindigkeit (auch als Ziehgeschwindigkeit bezeichnet) bewegte Endlosprofil begleiten. Dies bietet die Möglichkeit das Stanzwerkzeug in der Anfangsposition zu schließen, um damit das Endlosprofil lokal zu verformen und so lange im geschlossenen Zustand zu halten bis die Endposition erreicht wird, so dass eine Formgebung für eine verlängerte definierte Zeitspanne auf das Endlosprofil einwirken kann.

In der Endposition angekommen wird das Stanzwerkzeug wieder geöffnet und das Endlosprofil freigegeben, wobei das Stanzwerkzeug zurück in seine Anfangsposition verfahren wird, um den Stanzvorgang in einem anderen Abschnitt des Endlosprofils zu wiederholen. Auf diese Weise lassen sich besonders einfach unstetige Querschnittänderungen vornehmen und gleichzeitig eine Belastung des Endlosprofils aufgrund einer verlängerten "Einwirkzeit" verringern. Dies kann bei einer konstanten Vorschubgeschwindigkeit der Pultrusionsvorrichtung erfolgen, ohne dass die Geschwindigkeit zur Durchführung einzelner Bearbeitungsschritte variiert werden muss, so dass eine Produktivität der gesamten Pultrusionsvorrichtung nicht beeinflusst wird.

Des Weiteren können die erste Formgebungsvorrichtung und/oder die zweite Formgebungsvorrichtung jeweils zum zumindest teilweisen Aushärten des Endlosprofils ausgebildet sein. Die Matrix des Endlosprofils kann somit zunächst mittels der ersten Formgebungsvorrichtung zu einem ersten Teil gehärtet werden. Vorzugsweise bleibt die Matrix hierbei zunächst zu einem gewissen Anteil unvollständig ausgehärtet, insbesondere kann die Matrix in einem Gel-artigen Zustand verbleiben. In diesem Gel-artigen Zustand ist die Matrix einerseits leicht bearbeitbar, andererseits ausreichend zäh, um dennoch eine ausreichende Formstabilität des Endlosprofils für die nachfolgenden Bearbeitungsschritte bereitzustellen. Beispielsweise ist der Aushärtegrad in der ersten Formgebung gerade so gewählt, dass eine lokale Formänderung ermöglicht wird und dennoch trotz weiterer Zugkraftbeaufschlagung in der Pultrusionsvorrichtung erhalten bleibt.

Dies ermöglicht die durch das Stanzwerkzeug bewirkte lokale Formänderung, ohne dass eine bereits ausgehärtete Matrix oder die Fasern beschädigt werden. In der zweiten Formgebungsvorrichtung kann das Endlosprofil anschließend zu einem weiteren Teil ausgehärtet werden.

Ebenfalls vorzugsweise ist das Stanzwerkzeug zum lokalen Abtragen, zum lokalen Verdrängen und/oder zum lokalen Umformen von Material des Endlosprofils, und/oder zum lokalen Einbringen von zusätzlichem Material in das Endlosprofil und/oder zum lokalen Einbringen von Einlagen, insbesondere Inserts oder Inlays, in das Endlosprofil, und/oder zum lokalen Erzeugen von lokalen Ausnehmungen in dem definierten Abschnitt des Endlosprofils ausgebildet. Beispielsweise lassen sich somit lokale Ausnehmungen, Sprünge in der Kontur des Endlosprofils, Durchbrüche oder Löcher, sowie andere abrupte Formänderungen des Querschnittsverlaufs erzielen, ohne die Fasern zu beschädigen und eine optimale Festigkeit des Endlosprofils zu erzielen.

Ebenso kann zusätzliches Material, wie beispielsweise Tapes oder sogenannte Prepreg-Tapes, metallische Elemente, wie zum Beispiel Stringer, oder zusätzliche Kunststoffelemente, wie beispielsweise Kunststoffstege, eingebracht werden. Im Falle eines lediglich teilweise ausgehärteten Zustands des Endlosprofils ist hierbei ein stoffschlüssiges Fügen ohne Klebstoff möglich. Im Falle eines zusätzlichen Umformens kann das eingebrachte zusätzliche Material, insbesondere die genannten zusätzlichen Elemente, mit der Matrix des Endlosprofils (dem sogenannten Pultrudat) an der vorgesehenen Stelle kraftschlüssig verbunden werden.

Außerdem kann das Stanzwerkzeug einen auswechselbaren Arbeitsaufsatz umfassen, welcher zum Bewirken der lokalen Formänderung ausgebildet ist. Durch Auswechseln unterschiedlicher Arbeitsaufsätze wird es möglich, unterschiedliche Geometrien für die lokale Formänderung an dem Stanzwerkzeug vorzusehen und somit bei ein und demselben Endlosprofil nacheinander nach Belieben unterschiedliche Arbeitsaufsätze zu verwenden, oder aber die Pultrusionsvorrichtung auf einfache Art und Weise schnell für die Herstellung von unterschiedlichen Geometrien der Endlosprofile umzurüsten.

Des Weiteren kann das Stanzwerkzeug und/oder zumindest der Arbeitsaufsatz heizbar ausgebildet sein, um eine lokale Voraushärtung des Endlosprofils zumindest in dem definierten Abschnitt zu bewirken. Dies bietet den Vorteil, dass die Matrix des Endlosprofils zumindest in dem lokalen Abschnitt der lokalen Formänderung (weiter) gehärtet wird und somit eine ungewollte (spätere) Formänderung durch die allgemein anliegende Zugkraftbeaufschlagung verhindert wird. Die mittels des Stanzwerkzeugs eingebrachte lokale Formänderung kann in diesem Fall trotz der ständigen Zugkraftbeaufschlagung des Endlosprofils möglichst gut erhalten werden, die ansonsten zu einer Rückverformung führen würde, wodurch eine hohe Genauigkeit der Formänderung in besonderer Weise sichergestellt wird.

Wie bereits dargestellt, kann die Pultrusionsvorrichtung eine Zugvorrichtung zur kontinuierlichen Beaufschlagung des Endlosprofils mit einer angelegten Zugkraft umfassen. Das Endlosprofil wird hierdurch stetig mit der Zugkraft beaufschlagt und durch die einzelnen Bearbeitungsstationen gefördert.

Gemäß einer weiteren Ausführungsform ist es möglich, in eingebrachte Ausnehmungen Schaummaterial in das Endlosprofil, vorzugsweise in ein als Hohlprofil ausgestaltetes Endlosprofil, einzufüllen, welches anschließend, beispielsweise durch eine Temperatur in der zweiten Formgebungsvorrichtung, aufgeschäumt und ausgehärtet wird, um einen Hohlraum zu füllen und gegebenenfalls zu stützen.

Des Weiteren wird ein Verfahren zum Erzeugen eines faserverstärkten Endlosprofils vorgeschlagen, wobei das Endlosprofil einen zweiten, in einer Pultrusionsrichtung diskontinuierlichen Querschnittsverlauf aufweist, mit zumindest den folgenden Schritten:
- Erzeugen eines Endlosprofils mit einem kontinuierlichen Querschnittsverlauf,
- lokales Stanzen des Endlosprofils zum Bewirken einer lokalen Formänderung des kontinuierlichen Querschnittsverlaufs in einem definierten Abschnitt des Endlosprofils, um einen ersten diskontinuierlichen Querschnittsverlauf des Endlosprofils zu erzeugen,
- Umformen des ersten diskontinuierlichen Querschnittsverlaufs des Endlosprofils in den zweiten diskontinuierlichen Querschnittsverlaufs des Endlosprofils.

Optional kann der Schritt des Erzeugens des Endlosprofils mit einem kontinuierlichen Querschnittsverlauf ein zumindest teilweises erstes Härten des erzeugten Endlosprofils umfassen.

Außerdem ist es möglich, dass das Verfahren einen Schritt des Heizens des Endlosprofils zum lokalen Härten umfasst, der während oder im Anschluss an den Schritt des Stanzens durchgeführt wird.

Die Erfindung wird nachfolgend anhand eines Ausführungsbeispiels unter Bezugnahme auf die Zeichnungen näher erläutert. Es zeigen:
Fig. 1 eine Ausführungsform einer Pultrusionsvorrichtung gemäß der Beschreibung,
Fig. 2 einen Spannungsverlauf für eine Pultrusionsvorrichtung gemäß dem Stand der Technik, und
Fig. 3 einen Spannungsverlauf für eine Pultrusionsvorrichtung gemäß Fig. 1.

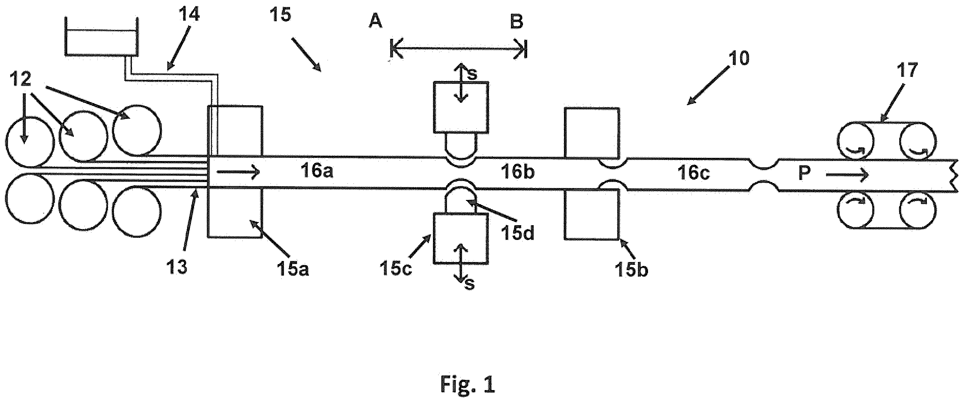

In Fig. 1 ist eine Ausführungsform einer Pultrusionsvorrichtung 10 gemäß der Beschreibung zum Erzeugen eines faserverstärkten Endlosprofils 16 mit einem in einer Pultrusionsrichtung P diskontinuierlichen Querschnittsverlauf 16c (im Folgenden als "zweiter diskontinuierlicher Querschnittsverlauf 16c" bezeichnet). Zunächst werden in einem ersten Schritt auf Spulen 12 vorgehaltene Verstärkungsfasern 13, beispielsweise aus Glas- oder Kohlenstofffasern, von den Spulen 12 abgezogen und mit einem Imprägnier-Werkzeug 14 mit einer Matrix, beispielsweise einem Harz, imprägniert. Anschließend werden die imprägnierten Fasern 13 durch eine Pressformeinrichtung 15 gezogen und zu einem Pultrusionsprofil 16 (im Folgenden auch als Endlosprofil bezeichnet) geformt. Die Pressformeinrichtung 15 umfasst zur Formgebung des Endlosprofils 16 eine erste Formgebungsvorrichtung 15a zum Erzeugen des Endlosprofils 16 mit einem kontinuierlichen Querschnittsverlauf 16a (als erste Vorstufe des finalen Endlosprofils 16 mit zweitem diskontinuierlichen Querschnittsverlauf 16c), und eine bezüglich der ersten Formgebungsvorrichtung 15a in Pultrusionsrichtung P nachfolgend angeordnete, zweite Formgebungsvorrichtung 15b zum Formen des finalen, zweiten diskontinuierlichen Querschnittsverlaufs 16c des Endlosprofils 16. Zusätzlich ist ein Stanzwerkzeug 15c zwischen der ersten Formgebungsvorrichtung 15a und der zweiten Formgebungsvorrichtung 15b angeordnet und dazu ausgebildet, zumindest in einem definierten Abschnitt des Endlosprofils 16 mit kontinuierlichem Querschnittsverlauf 16a eine lokale Formänderung des kontinuierlichen Querschnittsverlaufs 16a zu bewirken, um einen ersten diskontinuierlichen Querschnittsverlauf 16b des Endlosprofils 16 (zweite Vorstufe des finalen Endlosprofils 16 mit zweitem diskontinuierlichen Querschnittsverlauf 16c) zu erzeugen.

Beispielsweise kann das Stanzwerkzeug 15c mehrteilig ausgebildet sein, um aus mehreren Richtungen auf das Endlosprofil 16 zur gezielten Formänderung einzuwirken, indem das Stanzwerkzeug 15c geschlossen und anschließend wieder geöffnet werden kann (siehe Bewegungspfeile S). Vorzugsweise ist das Stanzwerkzeug 15c außerdem in der Pultrusionsrichtung P zumindest zwischen einer Anfangsposition A und einer Endposition B parallel zu der Pultrusionsrichtung P verfahrbar ausgebildet, so dass das Stanzwerkzeug 15c das Endlosprofil 16 im geschlossenen Zustand umschließen kann und parallel zu dem Endlosprofil 16 mitgeführt wird, um das Stanzwerkzeug 15c bei Erreichen der Endposition B wieder zu öffnen.

Beispielsweise kann das Stanzwerkzeug 15c zum lokalen Abtragen, zum lokalen Verdrängen und/oder zum lokalen Umformen von Material des Endlosprofils 16, und/oder zum lokalen Einbringen von zusätzlichem Material in das Endlosprofil 16 und/oder zum lokalen Einbringen von Einlagen, insbesondere Inserts oder Inlays, in das Endlosprofil, und/oder zum lokalen Erzeugen von lokalen Ausnehmungen in dem definierten Abschnitt des Endlosprofils ausgebildet sein, um eine entsprechende lokale Formänderung des Endlosprofils zu bewirken. Entsprechende geometrische Ausführungsformen des Stanzwerkzeugs sind nicht dargestellt.

Optional kann das Stanzwerkzeug 15c einen auswechselbaren Arbeitsaufsatz 15d umfassen, welcher zum Bewirken der lokalen Formänderung ausgebildet ist. Der auswechselbare Arbeitsaufsatz 15d kann somit leicht gegen einen anderen Arbeitsaufsatz ausgetauscht werden, beispielsweise um eine andere Formgeometrie vorzusehen.

Um das Endlosprofil 16 durch die einzelnen beschriebenen Bearbeitungsstationen zu fördern, umfasst die Pultrusionsvorrichtung 10 außerdem eine Zugvorrichtung 17 zur kontinuierlichen Beaufschlagung des Endlosprofils 16 mit einer Zugkraft in Pultrusionsrichtung P.

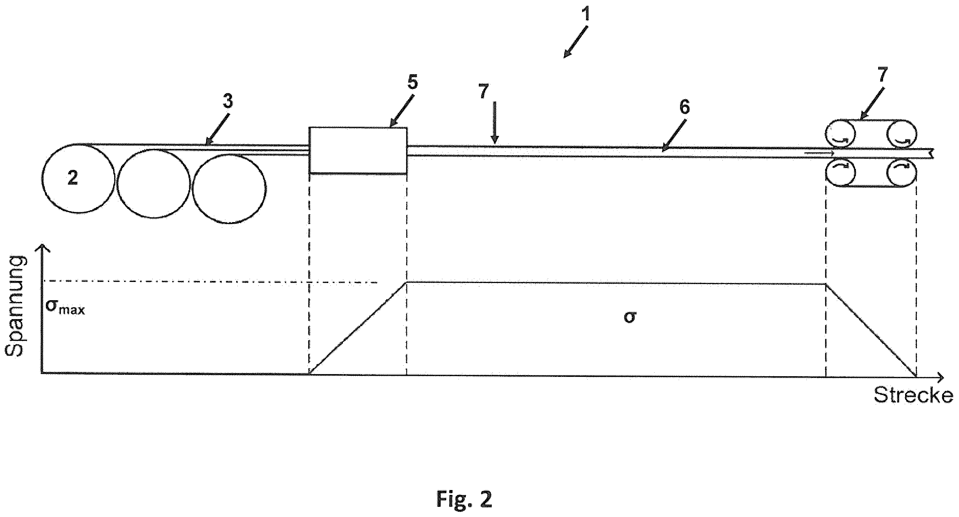

Fig. 2 zeigt einen Spannungsverlauf σ entlang der Länge des Endlosprofils 6 für eine Pultrusionsvorrichtung 1 gemäß dem Stand der Technik, wobei diese zur besseren Darstellbarkeit und Übersichtlichkeit lediglich in Teilen stark vereinfacht dargestellt ist. Zunächst werden in einem ersten Schritt auf Spulen 2 vorgehaltene Verstärkungsfasern 3 von den Spulen 2 abgezogen und mit einer Matrix imprägniert (nicht dargestellt). Anschließend werden die imprägnierten Fasern 3 durch eine Pressformeinrichtung 5 gezogen und zu dem Endlosprofil 6 mit definiertem Querschnitt umgeformt, wobei das Endlosprofil 6 einen stetigen, kontinuierlichen Querschnittsverlauf ohne Sprünge aufweist. Das Endlosprofil 6 wird mittels einer Zugvorrichtung 7 durch die Pultrusionsvorrichtung 1 gefördert.

Der dargestellte Spannungsverlauf σ zeigt einen Anstieg der Spannung innerhalb des Endlosprofils 6 während des Umformens und Aushärtens des Endlosprofils 6 in der Pressformeinrichtung 5 auf einen maximalen Wert σₘₐₓ, der bis zur Zugeinrichtung 7 erhalten bleibt.

Um nun aus dem kontinuierlichen Querschnittsverlauf des Endlosprofils 6 einen diskontinuierlichen Querschnittsverlauf zu erhalten, erfolgt gemäß dem Stand der Technik eine Bearbeitung des Endlosprofils 6 nachfolgend zu der Pressformeinrichtung 5 (beispielsweise an Position X), wo das Endlosprofil 6 mit einer maximalen Spannung σₘₐₓ beaufschlagt und die Gefahr eines Reißens des Endlosprofils 6 sehr hoch ist. Ebenso ist die Matrix bereits größtenteils ausgehärtet, so dass darüber hinaus eine Beschädigung der Matrix und der in der Matrix fixierten Fasern sehr wahrscheinlich ist.

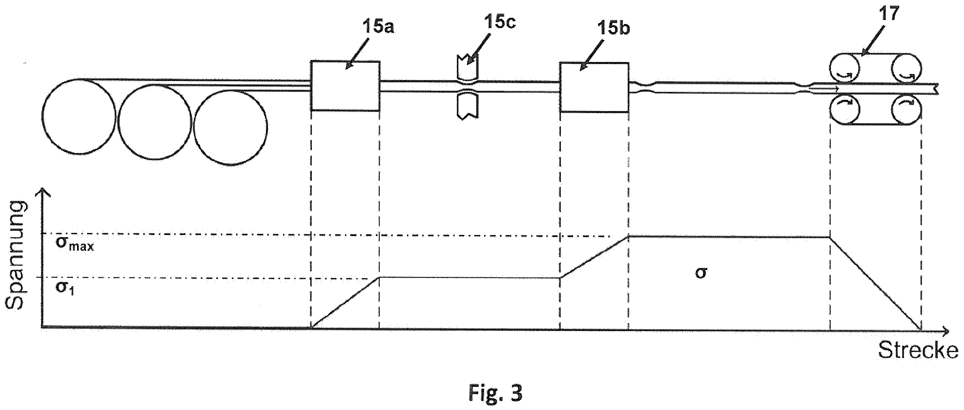

Fig. 3 zeigt dagegen einen Spannungsverlauf σ für eine Pultrusionsvorrichtung gemäß Fig. 1. Der besseren Übersichtlichkeit halber sind nur die Spulen 12, die erste Formgebungsvorrichtung 15a, das Stanzwerkzeug 15c und die zweite Formgebungsvorrichtung 15b sowie die Zugvorrichtung 17 dargestellt. Es versteht sich jedoch, dass alle zu Fig. 1 beschriebenen Merkmale auch für Fig. 3 gültig sind.

Auch in diesem Fall wird ein maximaler Spannungswert σₘₐₓ innerhalb des Endlosprofils 16 erst am Ende der Pressformeinrichtung 15 erreicht. Aufgrund der Aufteilung der Pressformeinrichtung 15 ist es jedoch möglich, das Endlosprofil 16 nach einem ersten Umformen in der ersten Formgebungsvorrichtung 15a auf besonders einfache Art zu bearbeiten. In diesem Stadium weist das Endlosprofil 16 noch eine reduzierte Spannungsbelastung σ₁ auf, die in der dargestellten Ausführungsform bei einem Bruchteil des maximalen Spannungswertes σₘₐₓ liegt. Eine Gefahr des Reißens des Endlosprofils 16 aufgrund der Bearbeitung mittels des Stanzwerkzeugs 15c wird erheblich reduziert. Erst anschließend durchläuft das Endlosprofil 16 die nachfolgend angeordnete zweite Formgebungsvorrichtung 15b, um das Endlosprofil 16 in die endgültige Form mit dem finalen zweiten diskontinuierlichen Querschnittsverlauf 16c umzuformen.

Optional können die erste Formgebungsvorrichtung 15a und/oder die zweite Formgebungsvorrichtung 15b jeweils zum zumindest teilweisen Aushärten des Endlosprofils 16 ausgebildet sein. Somit kann ein jeweiliger Aushärtegrad in jeder Vorrichtung individuell festgelegt und an die Anforderungen an eine optimale Bearbeitbarkeit ausgelegt werden.

Außerdem ist es möglich, dass das Stanzwerkzeug 15c und/oder zumindest der Arbeitsaufsatz 15d heizbar ausgebildet sind, um eine lokale Voraushärtung des Endlosprofils 16 zumindest in dem definierten Abschnitt der lokalen Formänderung zu bewirken, um ein unerwünschte Rückstellung der vorgenommenen Formgebung zu verhindern.

Mit der in den Fig. 1 und 3 dargestellten Pultrusionsvorrichtung 10 lässt sich also das faserverstärkte Endlosprofil 16 erzeugen, welches einen zweiten, in der Pultrusionsrichtung P diskontinuierlichen Querschnittsverlauf 16c aufweist. Hierzu wird zunächst das Endlosprofil 16 mit einem kontinuierlichen Querschnittsverlauf 16a erzeugt. Anschließend erfolgt ein lokales Stanzen des Endlosprofils 16 zum Bewirken einer lokalen Formänderung des kontinuierlichen Querschnittsverlaufs 16a in einem oder mehreren definierten Abschnitten des Endlosprofils 16, um einen ersten diskontinuierlichen Querschnittsverlauf 16b des Endlosprofils 16 zu erzeugen. Danach erfolgt ein Umformen des ersten diskontinuierlichen Querschnittsverlaufs 16b des Endlosprofils 16 in den zweiten diskontinuierlichen und finalen Querschnittsverlauf 16c des Endlosprofils 16.

Wie beschrieben kann der Schritt des Erzeugens des Endlosprofils 16 mit einem kontinuierlichen Querschnittsverlauf 16a zusätzlich ein zumindest teilweises erstes Härten des erzeugten Endlosprofils 16 umfassen. Ferner kann ein Schritt des Heizens des Endlosprofils 16 zum lokalen Härten vorgesehen werden, der während oder im Anschluss an den Schritt des Stanzens durchgeführt wird.

## Patentansprüche

1. Pultrusionsvorrichtung zum Erzeugen eines faserverstärkten Endlosprofils, welches einen zweiten, in einer Pultrusionsrichtung diskontinuierlichen Querschnittsverlauf aufweist, mit einer Pressformeinrichtung (15) zur Formgebung des Endlosprofils (16), umfassend
- eine erste Formgebungsvorrichtung (15a) zum Erzeugen des Endlosprofils (16) mit einem kontinuierlichen Querschnittsverlauf (16a), und
- eine bezüglich der ersten Formgebungsvorrichtung (15a) in Pultrusionsrichtung (P) nachfolgende, zweite Formgebungsvorrichtung (15b) zum Formen des zweiten diskontinuierlichen Querschnittsverlaufs (16c) des Endlosprofils (16),
**dadurch gekennzeichnet, dass**
- ein Stanzwerkzeug (15c) zwischen der ersten Formgebungsvorrichtung (15a) und der zweiten Formgebungsvorrichtung (15b) angeordnet und dazu ausgebildet ist, zumindest in einem definierten Abschnitt des Endlosprofils (16) eine lokale Formänderung des kontinuierlichen Querschnittsverlaufs (16a) zu bewirken, um einen ersten diskontinuierlichen Querschnittsverlauf (16b) des Endlosprofils (16) zu erzeugen.

2. Pultrusionsvorrichtung nach Anspruch 1, **dadurch gekennzeichnet, dass** das Stanzwerkzeug (15c) in der Pultrusionsrichtung (P) zumindest zwischen einer Anfangsposition (A) und einer Endposition (B) parallel zu der Pultrusionsrichtung (P) verfahrbar ausgebildet ist.

3. Pultrusionsvorrichtung nach Anspruch 1 oder 2, **dadurch gekennzeichnet, dass** die erste Formgebungsvorrichtung (15a) und/oder die zweite Formgebungsvorrichtung (15b) jeweils zum zumindest teilweisen Aushärten des Endlosprofils (16) ausgebildet sind.

4. Pultrusionsvorrichtung nach einem der Ansprüche 1 bis 3, **dadurch gekennzeichnet, dass** das Stanzwerkzeug (15c) zum lokalen Abtragen, zum lokalen Verdrängen und/oder zum lokalen Umformen von Material des Endlosprofils (16), und/oder zum lokalen Einbringen von zusätzlichem Material in das Endlosprofil (16) und/oder zum lokalen Einbringen von Einlagen, insbesondere Inserts oder Inlays, in das Endlosprofil (16), und/oder zum lokalen Erzeugen von lokalen Ausnehmungen in dem definierten Abschnitt des Endlosprofils (16) ausgebildet ist.

5. Pultrusionsvorrichtung nach einem der Ansprüche 1 bis 4, **dadurch gekennzeichnet, dass** das Stanzwerkzeug (15c) einen auswechselbaren Arbeitsaufsatz (15d) umfasst, welcher zum Bewirken der lokalen Formänderung ausgebildet ist.

6. Pultrusionsvorrichtung nach einem der Ansprüche 1 bis 5, **dadurch gekennzeichnet, dass** das Stanzwerkzeug (15c) und/oder zumindest der Arbeitsaufsatz (15d) heizbar ausgebildet sind, um eine lokale Voraushärtung des Endlosprofils (16) zumindest in dem definierten Abschnitt zu bewirken.

7. Pultrusionsvorrichtung nach einem der Ansprüche 1 bis 6, **dadurch gekennzeichnet, dass** die Pultrusionsvorrichtung (10) eine Zugvorrichtung (17) zur kontinuierlichen Beaufschlagung des Endlosprofils (16) mit einer Zugkraft umfasst.

8. Verfahren zum Erzeugen eines faserverstärkten Endlosprofils, welches einen zweiten, in einer Pultrusionsrichtung diskontinuierlichen Querschnittsverlauf aufweist, mit zumindest den folgenden Schritten:
- Erzeugen eines Endlosprofils mit einem kontinuierlichen Querschnittsverlauf mittels einer ersten Formgebungsvorrichtung (15a),
- lokales Stanzen des Endlosprofils mittels eines Stanzwerkzeugs (15c) zum Bewirken einer lokalen Formänderung des kontinuierlichen Querschnittsverlaufs in einem definierten Abschnitt des Endlosprofils, um einen ersten diskontinuierlichen Querschnittsverlauf des Endlosprofils zu erzeugen,
- Umformen des ersten diskontinuierlichen Querschnittsverlaufs des Endlosprofils in den zweiten diskontinuierlichen Querschnittsverlaufs des Endlosprofils mittels einer bezüglich der ersten Formgebungsvorrichtung (15a) in Pultrusionsrichtung (P) nachfolgenden, zweiten Formgebungsvorrichtung (15b), wobei das Stanzwerkzeugs (15c) zwischen der ersten Formgebungsvorrichtung (15a) und der zweiten Formgebungsvorrichtung (15b) angeordnet ist.

9. Verfahren nach Anspruch 8, wobei der Schritt des Erzeugens des Endlosprofils mit einem kontinuierlichen Querschnittsverlauf ein zumindest teilweises erstes Härten des erzeugten Endlosprofils umfasst.

10. Verfahren nach Anspruch 8 oder 9, wobei das Verfahren außerdem einen Schritt des Heizens des Endlosprofils zum lokalen Härten umfasst, der während oder im Anschluss an den Schritt des Stanzens durchgeführt wird.

## Claims

1. A pultrusion device for producing a fibre-reinforced continuous profile which has a second cross-sectional profile which is discontinuous in a pultrusion direction, with a press-forming means (15) for shaping the continuous profile (16), comprising
- a first shaping device (15a) for producing the continuous profile (16) with a continuous cross-sectional profile (16a), and
- a second shaping device (15b), succeeding the first shaping device (15a) in the pultrusion direction (P), for forming the second discontinuous cross-sectional profile (16c) of the continuous profile (16),
**characterised in that**
- a punching tool (15c) is arranged between the first shaping device (15a) and the second shaping device (15b) and is designed to bring about, at least in a defined portion of the continuous profile (16), a local change in shape of the continuous cross-sectional profile (16a), in order to produce a first discontinuous cross-sectional profile (16b) of the continuous profile (16).

2. A pultrusion device according to Claim 1, **characterised in that** the punching tool (15c) is designed to be movable in the pultrusion direction (P) at least between an initial position (A) and an end position (B) parallel to the pultrusion direction (P).

3. A pultrusion device according to Claim 1 or Claim 2, **characterised in that** the first shaping device (15a) and/or the second shaping device (15b) is/are designed in each case for at least partially curing the continuous profile (16).

4. A pultrusion device according to one of Claims 1 to 3, **characterised in that** the punching tool (15c) is designed for the local removal, the local displacement and/or the local reshaping of material of the continuous profile (16), and/or for the local introduction of additional material into the continuous profile (16) and/or for the local introduction of insertions, especially inserts or inlays, into the continuous profile (16), and/or for the local production of local recesses in the defined portion of the continuous profile (16).

5. A pultrusion device according to one of Claims 1 to 4, **characterised in that** the punching tool (15c) comprises an exchangeable working attachment (15d) which is designed to bring about the local change in shape.

6. A pultrusion device according to one of Claims 1 to 5, **characterised in that** the punching tool (15c) and/or at least the working attachment (15d) is/are designed to be heatable, in order to bring about local preliminary curing of the continuous profile (16) at least in the defined portion.

7. A pultrusion device according to one of Claims 1 to 6, **characterised in that** the pultrusion device (10) comprises a pulling device (17) for continuously applying a tensile force to the continuous profile (16).

8. A method for producing a fibre-reinforced continuous profile which has a second cross-sectional profile which is discontinuous in a pultrusion direction, having at least the following steps:
- producing a continuous profile with a continuous cross-sectional profile by means of a first shaping device (15a),
- locally punching the continuous profile by means of a punching tool (15c) for bringing about a local change in shape of the continuous cross-sectional profile in a defined portion of the continuous profile, in order to produce a first discontinuous cross-sectional profile of the continuous profile,
- reshaping the first discontinuous cross-sectional profile of the continuous profile into the second discontinuous cross-sectional profile of the continuous profile by means of a second shaping device (15b), succeeding the first shaping device (15a) in the pultrusion direction (P), wherein the punching tool (15c) is arranged between the first shaping device (15a) and the second shaping device (15b).

9. A method according to Claim 8, wherein the step of producing the continuous profile with a continuous cross-sectional profile comprises an at least partial first hardening of the continuous profile produced.

10. A method according to Claim 8 or Claim 9, wherein the method furthermore comprises a step of heating the continuous profile for local hardening, which is carried out during or following the step of punching.

## Revendications

1. Dispositif de pultrusion permettant d'obtenir un profilé sans fin renforcé par des fibres qui comporte un second tracé de section discontinu dans la direction de pultrusion, ayant un dispositif de moulage par compression (15) permettant la mise en forme du profilé sans fin (16) comprenant :
- un premier dispositif de mise en forme (15a) permettant d'obtenir le profilé sans fin (16) avec un tracé de section continu (16a), et
- un second dispositif de mise en forme (15b) situé à l'arrière du premier dispositif de mise en forme (15a) dans la direction de pultrusion (P) et permettant d'obtenir le second tracé de section (16c) discontinu du profilé sans fin (16),
**caractérisé en ce qu'**
- un outil d'estampage (15c) est positionné entre le premier dispositif de mise en forme (15a) et le second dispositif de mise en forme (15b) et est réalisée de façon à provoquer, au moins dans un segment défini du profilé sans fin (16) une modification de forme locale du tracé de section continu (16a), de façon à obtenir un premier tracé de section discontinu (16b) du profilé sans fin (16).

2. Dispositif de pultrusion conforme à la revendication 1,
**caractérisé en ce que**
l'outil d'estampage (15c) peut être déplacé dans la direction de pultrusion (P) parallèlement à cette direction au moins entre une position de départ (A) et une position terminale (B).

3. Dispositif de pultrusion conforme à la revendication 1 ou 2,
**caractérisé en ce que**
le premier dispositif de mise en forme (15a) et/ou le second dispositif de mise en forme (15b) est(sont respectivement) formé(s) pour permettre de durcir le profilé sans fin (16) au moins partiellement.

4. Dispositif de pultrusion conforme à l'une des revendications 1 à 3,
**caractérisé en ce que**
l'outil d'estampage (15c) est réalisé pour permettre un dégagement local, un déplacement local et/ou une déformation locale du matériau du profilé sans fin (16) et/ou une introduction locale de matériau supplémentaire dans ce profilé sans fin (16) et/ou une introduction locale de garnitures, en particulier d'inserts ou d'inlays dans le profilé sans fin (16), et/ou pour obtenir localement des évidements locaux dans le segment défini du profilé sans fin (16).

5. Dispositif de pultrusion conforme à l'une des revendications 1 à 4,
**caractérisé en ce que**
l'outil d'estampage (15c) comporte une garniture de travail échangeable (15d) qui est réalisée pour permettre d'obtenir la modification de forme locale.

6. Dispositif de pultrusion conforme à l'une des revendications 1 à 5,
**caractérisé en ce que**
l'outil d'estampage (15c) et/ou au moins la garniture de travail (15d) peut être chauffé(e) pour obtenir un durcissement local du profilé sans fin (16) au moins dans le segment défini.

7. Dispositif de pultrusion conforme à l'une des revendications 1 à 6,
**caractérisé en ce qu'**
il comporte un dispositif de traction (17) permettant de fournir en continu au profilé sans fin (16) une force de traction.

8. Procédé d'obtention d'un profilé sans fin (16) renforcé par des fibres qui comporte un second tracé de section discontinu dans la direction de pultrusion, comprenant au moins les étapes suivantes consistantes à :
- obtenir un profilé sans fin ayant un tracé de section continu au moyen d'un premier dispositif de mise en forme (15a),
- estamper localement le profilé sans fin au moyen d'un outil d'estampage (15c) pour obtenir une modification de forme locale du tracé de section continu dans un segment défini de ce profilé sans fin pour obtenir un premier tracé de section discontinu de celui-ci,
- déformer le premier tracé de section discontinu du profilé sans fin pour obtenir un second tracé de section discontinu de ce profilé sans fin au moyen d'un second dispositif de mise en forme (15b) situé à l'arriére du premier dispositif de mise en forme (15a) dans la direction de pultrusion (P), l'outil d'estampage (15c) étant situé entre le premier dispositif de mise en forme (15a) et le second dispositif de mise en forme (15b).

9. Procédé conforme à la revendication 8,
selon lequel l'étape d'obtention du profilé sans fin avec un tracé de section continu comprend un premier durcissement au moins partiel du profilé sans fin obtenu.

10. Procédé conforme à la revendication 8 ou 9,
comportant en outre une étape de chauffage du profilé sans fin pour permettre de le durcir localement qui est mise en oeuvre pendant ou en connexion avec l'étape d'estampage.
